# DEMANDE DE BREVET EUROPEEN

(11) **EP 4 760 678 A1**
(43) Date de publication de la demande: **17.06.2026**
(21) Numéro de dépôt: 25196488.8
(22) Date de dépôt: 18.08.2025
(51) Int. Cl.: G09B 9/08, B64C 27/04, B64D 31/06, G09B 9/18, G09B 9/44, G09B 9/46, B64D 43/00

(54) **PROCEDE D'ENTRAINEMENT A LA PANNE MOTEUR SUR UN GIRAVION MONOMOTEUR**

(30) Priorité: 13.12.2024 FR 2414128
(71) Demandeur: Airbus Helicopters, 13725 Marignane Cedex (FR)
(72) Inventeur: DUMUR, Guillaume, 13300 SALON DE PROVENCE (FR); PRUNEL, Marc, 13725 MARIGNANE (FR); CALABRESE, Bernard, 13725 MARIGNANE (FR)
(74) Mandataire: GPI Brevets

(57) **Abrégé**

La présente invention concerne un procédé de simulation d'une panne d'un moteur à combustion (10) d'un giravion (1) monomoteur, le giravion (1) comprenant un contrôleur (30) pilotant le moteur à combustion (10). Le procédé comporte : i) l'armement d'un mode école en manœuvrant un bouton d'armement (20) en communication avec le contrôleur (30), le mode école ne pouvant pas être activé en l'absence dudit armement du mode école, ii) sous réserve dudit armement, activation du mode école en manœuvrant un bouton d'activation (25) qui est en communication avec le contrôleur (30), le contrôleur (30) pilotant en conséquence une décélération du moteur à combustion (10) pour atteindre le régime de ralenti, iii) désactivation du mode école en manœuvrant à nouveau le bouton d'activation (25), le contrôleur (30) pilotant en conséquence une accélération du moteur à combustion (10) pour atteindre un régime de vol, le mode école ne pouvant être réinitialisé que lors d'une nouvelle phase de simulation.

## Description

La présente invention concerne un procédé d'entraînement à la panne moteur sur un giravion monomoteur.

Un giravion comporte usuellement une installation motrice pour mettre en mouvement au moins un rotor participant à sa sustentation. Un tel rotor est dénommé « rotor de sustentation » par commodité par la suite. Par exemple, un hélicoptère peut comprendre un rotor de sustentation et un rotor arrière qui participe au contrôle du mouvement en lacet de l'hélicoptère.

L'installation motrice peut comporter au moins un moteur à combustion. L'expression « moteur à combustion » désigne, par commodité, un moteur nécessitant la combustion d'un carburant pour produire une énergie mécanique, tel qu'un turbomoteur ou encore un moteur à pistons par exemple. L'expression « moteur à combustion » est à opposer à l'expression « moteur électrique » qualifiant les moteurs transformant une énergie électrique en une énergie mécanique.

Ainsi, un giravion monomoteur comporte un unique moteur à combustion pour mettre en mouvement une chaine mécanique connectée au ou aux rotors.

Le fonctionnement du moteur à combustion est contrôlé par un système de régulation. Par exemple, un système de régulation est connu sous l'acronyme FADEC associé à l'expression anglaise « Full Authority Digital Engine Control ». Un système de régulation comprend usuellement un calculateur moteur relié à divers capteurs et un doseur de carburant. Le doseur de carburant permet alors au système de régulation de contrôler le débit de carburant transmis au moteur à combustion pour être injecté dans une chambre de combustion avec un comburant.

Le système de régulation comprend classiquement un sélecteur, dit « sélecteur de commande » par commodité, pour établir le régime de fonctionnement à appliquer. Par exemple, le sélecteur de commande comporte trois positions.

Lorsque le sélecteur de commande se trouve dans une position, dite par exemple « position STOP », le moteur à combustion est éteint.

Lorsque le sélecteur de commande se trouve dans une position, dite par exemple « position FLIGHT », le moteur à combustion est en fonctionnement nominal. Le moteur à combustion peut alors fonctionner en mettant en œuvre un régime de vol usuel. Le moteur à combustion développe une puissance motrice pour mettre en mouvement la chaine mécanique, et par suite le ou les rotors.

Enfin, le sélecteur de commande comprend une position intermédiaire dite par exemple « position IDLE ». Lorsque le sélecteur de commande est positionné dans cette position IDLE, le moteur à combustion fonctionne à un régime de ralenti. Lors de l'application du régime de ralenti, le moteur à combustion développe une puissance motrice de ralenti inférieure aux puissances développées lors de l'application des régimes de vol, voire une puissance motrice nulle.

Eventuellement, un giravion peut aussi comprendre une poignée de gaz tournante pour requérir la mise au ralenti du moteur à combustion.

Pour permettre l'entraînement d'un élève, un giravion peut comprendre des commandes de pilotage doublées. Le giravion peut alors comprendre un sélecteur de commande, et deux poignées de gaz tournantes.

En cas de panne du moteur à combustion sur un giravion monomoteur usuel, le rotor de sustentation n'est plus entraîné par ce moteur à combustion. La vitesse de rotation du rotor de sustentation subit une décélération importante. L'aéronef doit alors entrer, sous les commandes de son pilote, dans une phase de vol en autorotation pour limiter la baisse de la vitesse de rotation du rotor de sustentation.

Cette entrée en phase de vol en autorotation doit être faite dans un délai très court pour conserver une vitesse de rotation du rotor de sustentation acceptable. Une phase de vol en autorotation correspond à une phase de vol particulière dans laquelle l'aéronef vole en descente sans puissance motrice. Sur un hélicoptère du type décrit précédemment, le rotor de sustentation est alors entraîné en rotation par le vent relatif. Le rotor de sustentation reste le siège d'une portance stabilisée suffisante pour freiner et contrôler la descente de l'aéronef jusqu'à l'atterrissage. Pour appliquer cette procédure particulière de pilotage, le pilote doit entrer dans la phase d'autorotation en baissant rapidement le pas collectif des pales du rotor de sustentation pour maintenir une vitesse de rotation du rotor de sustentation dans des limites admissibles. Cette procédure particulière exige une grande précision et un entraînement adapté et récurrent des pilotes. Un tel entraînement s'avère de fait délicat à mettre en œuvre. Lors d'un tel entraînement, un instructeur ou son élève place le moteur à combustion dans le régime de ralenti pour simuler la panne moteur. L'instructeur ou son élève manœuvre, par exemple, une poignée de gaz tournante jusqu'à une butée mécanique de ralenti. Si nécessaire, l'instructeur ou son élève peut manœuvrer à tout moment la poignée de gaz tournante pour réaccélérer le moteur à combustion.

Ainsi, si l'instructeur décide de mettre fin à l'entraînement s'il l'estime nécessaire pour la sécurité du vol, l'instructeur manœuvre sa poignée tournante pour réaccélérer le moteur à combustion.

Cependant, il ne faut pas que l'élève interprète mal la réaccélération et redemande un passage dans le mode de ralenti.

A cet effet, les poignées de gaz tournantes sont reliées entre elles par un mécanisme de synchronisation. Un mouvement d'une poignée de gaz tournante induit de fait le même mouvement sur l'autre poignée de gaz tournante. Ainsi, chaque pilote est immédiatement averti que l'autre pilote a initié une commande avec une poignée de gaz tournante. Bien qu'efficace, un tel système s'avère lourd et encombrant.

Le document EP 4 450 399 A1 décrit un procédé de simulation d'une panne moteur sur un giravion, le giravion comprenant une installation motrice munie de plusieurs moteurs.

Le document CN115762292 est éloigné de la problématique de l'invention en décrivant un hélicoptère ayant deux moteurs pilotés respectivement par deux systèmes de contrôle. De plus, les deux systèmes de contrôle sont connectés respectivement à deux commandes susceptibles chacune de requérir l'application d'un mode école. Un mode école est mis en œuvre lorsque les deux systèmes de contrôle ne sont pas en panne et que les deux commandes sont dans une position FLIGHT.

Il en va de même pour le document présent le 7 novembre 2024 à l'adresse internet https://ardupilot.org/copter/docs/traditional-helicopter-autorotation-mode.html qui décrit des modes d'autorotation d'aéronefs sans pilote.

Les documents EP 4 446 232 A1, EP 3 733 508 A1, CN 112 216 181 A et CA 3 064 098 C sont aussi connus et éloignés de la problématique de l'invention.

La présente invention a alors pour objet de proposer un procédé innovant pour sécuriser la mise en œuvre d'un entraînement à la panne moteur sur un giravion monomoteur.

L'invention vise ainsi un procédé de simulation d'une panne d'un moteur à combustion d'un giravion monomoteur, le giravion comprenant un contrôleur pilotant le moteur à combustion, le moteur à combustion pouvant fonctionner sur ordre du contrôleur dans un mode nominal selon au moins un régime de vol pour fournir une puissance motrice à au moins un rotor, le moteur à combustion pouvant fonctionner sur ordre du contrôleur selon un régime de ralenti.

Ce procédé comporte une phase de simulation ayant les étapes suivantes :
- armement d'un mode école en manœuvrant un bouton d'armement en communication avec le contrôleur, le contrôleur pilotant un fonctionnement du moteur à combustion selon ledit au moins un régime de vol, le mode école ne pouvant pas être activé en l'absence dudit armement du mode école,
- sous réserve dudit armement du mode école, activation du mode école en manœuvrant un bouton d'activation qui est en communication avec le contrôleur et différent du bouton d'armement, le contrôleur pilotant en conséquence une décélération du moteur à combustion pour atteindre ledit régime de ralenti,
- désactivation du mode école en manœuvrant à nouveau le bouton d'activation, le contrôleur pilotant en conséquence une accélération du moteur à combustion pour atteindre ledit au moins un régime de vol, le mode école ne pouvant être réinitialisé que lors d'une nouvelle phase de simulation.

Ainsi, le bouton d'armement permet simplement d'autoriser l'utilisation du mode école, mais ne permet pas d'activer le mode école. Un pilote, et par exemple un instructeur ou son élève, peut alors manœuvrer ce bouton d'armement.

Lorsque le mode école est armé, l'instructeur ou l'élève peut manœuvrer le bouton d'activation. Le mode école est alors automatiquement activé. Le moteur à combustion est alors décéléré par le contrôleur pour fonctionner au ralenti afin de simuler une panne. Par exemple, le moteur à combustion ayant un arbre de travail lié mécaniquement et cinématiquement au rotor, cet arbre de travail est décéléré en réduisant le débit de carburant alimentant le moteur à combustion. Un second appui sur le bouton d'activation commande automatiquement l'accélération du moteur à combustion. Selon l'exemple précédent, la vitesse de rotation de l'arbre de travail est augmentée en augmentant le débit de carburant alimentant le moteur à combustion. Ainsi, un instructeur peut réaccélérer le moteur à combustion s'il le juge nécessaire. Par contre, l'élève ne peut pas remettre accidentellement le moteur à combustion au ralenti suite à une réaccélération. En effet, une nouvelle manœuvre du bouton d'activation n'a aucune conséquence sur la puissance motrice générée par le moteur à combustion tant qu'une nouvelle phase de simulation n'est pas engagée, soit en désarmant le mode école puis en réarmant un nouveau mode école, via une double sollicitation du bouton d'armement, soit simplement en réarmant un nouveau mode école via une simple sollicitation du bouton d'armement selon la variante. Ainsi, pour simuler à nouveau la panne moteur, il convient dans ce cas d'appuyer au moins une fois sur le bouton d'armement pour initier une nouvelle phase de simulation.

Ce procédé tend alors à limiter les risques de mise au ralenti accidentelle du moteur à combustion sur un giravion monomoteur en mettant en œuvre un mode école de simulation à la panne moteur. Ce procédé peut être mis en œuvre de manière simple, peu encombrante et légère. Ce procédé peut éventuellement permettre de ne pas agencer des poignées de gaz tournantes.

Le procédé peut comporter une ou plusieurs des caractéristiques qui suivent, prises seules ou en combinaison.

Ainsi, la phase de simulation peut comporter un désarmement en manœuvrant le bouton d'armement à tout moment après ledit armement du mode école, le désarmement mettant fin à la phase de simulation, et si le moteur à combustion est au régime de ralenti, alors le contrôleur pilote, à la suite du désarmement, une accélération du moteur à combustion pour atteindre ledit au moins un régime de vol.

A tout moment, le désarmement peut être engagé et conduire au fonctionnement automatique du moteur à combustion selon un régime de vol.

Selon une possibilité compatible avec les précédentes, le procédé peut comporter une génération d'une alerte d'armement avec un alerteur tant que ledit mode école est armé.

Une alerte visuelle est, par exemple, émise sur un afficheur du giravion pour signaler à l'équipage que le mode école est armé.

L'invention vise de plus un giravion mettant en œuvre un tel procédé de simulation d'une panne moteur sur un giravion monomoteur.

Un tel giravion monomoteur comporte un unique moteur à combustion pour mettre en mouvement une chaîne mécanique connectée à au moins un rotor, le giravion comprenant un contrôleur pilotant le moteur à combustion, le moteur à combustion pouvant fonctionner sur ordre du contrôleur dans un mode nominal selon au moins un régime de vol pour fournir une puissance motrice à au moins un rotor, le moteur à combustion pouvant fonctionner sur ordre du contrôleur selon un régime de ralenti.

Le giravion comporte un bouton d'armement et au moins un bouton d'activation connectés au contrôleur pour mettre en œuvre le procédé précédemment décrit.

Le giravion peut comprendre une ou plusieurs des caractéristiques qui suivent, prises seules ou en combinaison.

Ainsi, le giravion peut comporter un alerteur connecté au contrôleur pour générer une alerte d'armement suite à l'armement du mode école.

Selon une possibilité compatible avec les précédentes, le giravion peut comprendre deux boutons d'activation configurés pour être manœuvrables respectivement par deux pilotes.

Il est possible d'agencer un unique bouton d'armement pour armer le mode école, et un bouton d'activation par pilote. Les boutons d'activation peuvent être agencés sur des commandes de vol usuelles. Par exemple, le bouton d'armement est placé sur un pupitre séparant deux pilotes. Eventuellement, les boutons d'activation peuvent être placés sur des manches de commande d'un pas cyclique des pales d'un rotor.

Selon une possibilité compatible avec les précédentes, ledit au moins un bouton d'activation peut être un bouton monostable.

Un tel bouton d'activation permet de garantir que le bouton d'activation ne se trouve pas dans une position ne correspondant pas à la situation courante.

Selon une possibilité compatible avec les précédentes, ledit au moins un bouton d'armement peut être un bouton monostable ou un bouton bistable.

En présence d'un bouton d'armement monostable, un seul appui sur le bouton d'armement permet d'armer une nouvelle phase de simulation après la désactivation.

En présence d'un bouton d'armement bistable, il peut être nécessaire d'appuyer une fois sur le bouton d'armement pour désarmer le mode école courant et une nouvelle fois pour réarmer le mode école.

Selon une possibilité compatible avec les précédentes, ledit contrôleur peut comporter un calculateur moteur contrôlant le moteur à combustion, ledit bouton d'armement et ledit bouton d'activation communiquant avec le calculateur moteur pour mettre en œuvre la phase de simulation.

Le calculateur moteur classique d'un moteur à combustion peut par exemple être programmé pour appliquer le procédé de l'invention. Ce procédé peut alors être appliqué de manière simple sur un hélicoptère existant. Le calculateur moteur identifie le régime à appliquer en fonction de la position du sélecteur de commande, puis détermine si le mode école est armé en recevant un signal provenant du bouton d'armement, puis met en œuvre le procédé en fonction du signal émis par le ou les boutons d'activation, selon la logique précédente.

Alternativement, ledit contrôleur peut comporter un calculateur avionique et un calculateur moteur contrôlant le moteur à combustion, ledit bouton d'armement et ledit bouton d'activation communiquant avec le calculateur avionique, le calculateur avionique communiquant avec le calculateur moteur pour mettre en œuvre la phase de simulation.

Dans ce cas, la logique d'activation du mode école est abritée non pas dans le calculateur moteur, mais dans le calculateur avionique. Le calculateur avionique communique avec ce calculateur moteur qui fonctionne de manière classique . Un calculateur avionique classique peut par exemple être programmé pour appliquer le procédé de l'invention. En fonction des appuis sur le bouton d'armement et le ou les boutons d'activation, le calculateur avionique transmet un signal au calculateur moteur indiquant d'éteindre le moteur à combustion, de mettre au régime de ralenti le moteur à combustion ou de le faire fonctionner selon un régime de vol. Ce procédé peut alors être appliqué de manière simple sur un hélicoptère existant sans impliquer une modification du calculateur moteur.

Alternativement, ledit contrôleur peut comporter un mécanisme à relais électromécaniques et un calculateur moteur contrôlant le moteur à combustion, ledit bouton d'armement et ledit bouton d'activation communiquant avec le mécanisme à relais électromécaniques, le mécanisme à relais électromécaniques communiquant avec le calculateur moteur pour mettre en œuvre la phase de simulation.

Les logiques d'armement et activation peuvent être faites par câblage et l'utilisation de relais. Ces relais vont ensuite piloter des transitions entre le régime de ralenti et le régime de vol de manière transparente pour le calculateur moteur. En fonction des appuis sur le bouton d'armement et le ou les boutons d'activation, le mécanisme à relais transmet un signal au calculateur moteur indiquant d'éteindre le moteur à combustion, de mettre au régime de ralenti le moteur à combustion ou de le faire fonctionner selon un régime de vol. Un mécanisme à relais simple peut être utilisé, par exemple sur un giravion existant, pour mettre en œuvre le procédé de l'invention facilement et à moindre coût.

Un mécanisme à six relais peut être suffisant.

Par exemple, le bouton d'armement ferme un premier contact d'armement et un deuxième contact d'armement dans une première position d'armement, le bouton d'armement fermant dans une deuxième position d'armement un troisième contact d'armement, le bouton d'activation fermant un premier contact d'activation et un deuxième contact d'activation dans une première position d'activation, le bouton d'activation fermant dans une deuxième position d'activation un troisième contact d'activation, le mécanisme à relais électromécaniques comportant :
- un premier relais muni d'une première bobine reliée électriquement à une première borne d'armement de sortie dudit premier contact d'armement,
- un deuxième relais muni d'une deuxième bobine reliée électriquement à une deuxième borne d'armement de sortie dudit troisième contact d'armement,
- un troisième relais muni d'une troisième bobine reliée électriquement au deuxième contact d'armement et à la deuxième borne d'armement de sortie via un contact du deuxième relais piloté par la deuxième bobine,
- un quatrième relais muni d'une quatrième bobine reliée électriquement à une première borne d'activation de sortie du premier contact d'activation, une première borne d'activation d'entrée du premier contact d'activation étant reliée électriquement à la première borne d'armement de sortie via un contact du premier relais piloté par la première bobine,
- un cinquième relais muni d'une cinquième bobine reliée électriquement à une deuxième borne d'activation de sortie du troisième contact d'activation,
- un sixième relais muni d'une sixième bobine reliée électriquement à une borne de désactivation de sortie du deuxième contact d'activation et à la deuxième borne d'activation de sortie via un contact du cinquième relais piloté par la cinquième bobine, une ligne électrique de désarmement étant reliée électriquement à la première bobine et comprenant un contact du troisième relais piloté par la troisième bobine et un contact du sixième relais piloté par la sixième bobine

L'invention et ses avantages apparaîtront avec plus de détails dans le cadre de la description qui suit avec des exemples donnés à titre illustratif en référence aux figures annexées qui représentent :
la figure 1, un schéma illustrant un giravion selon l'invention,
la figure 2, un schéma illustrant le procédé l'invention,
la figure 3, un schéma illustrant un exemple de contrôleur du giravion,
la figure 4, un schéma illustrant un exemple de contrôleur du giravion,
la figure 5, un schéma illustrant un exemple de contrôleur du giravion lorsque le moteur à combustion est éteint,
la figure 6, un schéma illustrant le contrôleur de la figure 5 lorsque le moteur à combustion est mis au régime de ralenti avant vol avec un sélecteur de commande,
la figure 7, un schéma illustrant le contrôleur de la figure 5 lorsque le sélecteur de commande requiert d'appliquer le régime de vol avant la phase de simulation,
la figure 8, un schéma illustrant le contrôleur de la figure 5 lorsque le sélecteur de commande requiert d'appliquer le régime de vol et le bouton d'armement est manœuvré pour armer le mode école,
la figure 9, un schéma illustrant le contrôleur de la figure 5 lorsque le sélecteur de commande requiert d'appliquer le régime de vol et le bouton d'armement est relâché après l'armement du mode école,
la figure 10, un schéma illustrant le contrôleur de la figure 5 lorsque le sélecteur de commande requiert d'appliquer le régime de vol et le bouton d'activation est sollicité pour activer le mode école et passer le moteur à combustion au régime de ralenti,
la figure 11, un schéma illustrant le contrôleur de la figure 5 lorsque le sélecteur de commande requiert d'appliquer le régime de vol et le bouton d'activation est relâché après l'activation du mode école,
la figure 12, un schéma illustrant le contrôleur de la figure 5 lorsque le sélecteur de commande requiert d'appliquer le régime de vol et le bouton d'activation est sollicité pour désactiver le mode école, et
la figure 13, un schéma illustrant le contrôleur de la figure 5 lorsque le sélecteur de commande requiert d'appliquer le régime de vol et le bouton d'armement est sollicité pour désarmer le mode école.

Les éléments présents dans plusieurs figures distinctes sont affectés d'une seule et même référence.

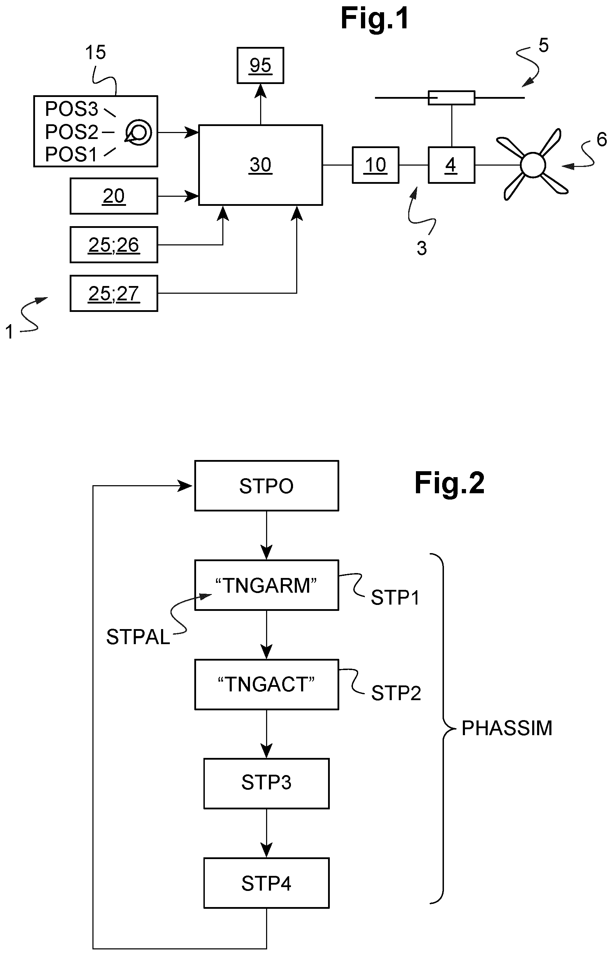

La figure 1 présente un giravion 1 selon l'invention. Le giravion 1 comporte au moins un rotor. Ainsi, le giravion 1 illustré est un hélicoptère ayant un rotor de sustentation 5 et un rotor arrière 6.

En outre, le giravion 1 est monomoteur. Ainsi, le giravion 1 comporte un unique moteur à combustion 10 pour mettre en mouvement avec son arbre de travail une chaine mécanique 3 reliée mécaniquement à un ou aux rotors 5, 6. Par exemple, la chaîne mécanique 3 comporte une boite de transmission de puissance 4 reliée mécaniquement au moteur à combustion 10 pour mettre en mouvement le ou les rotors 5, 6.

En outre, le giravion 1 comporte un contrôleur 30 pilotant le moteur à combustion 10 de manière classique. Par exemple, le contrôleur 30 pilote un doseur de carburant du moteur à combustion 10 pour commander la puissance motrice générée par le moteur à combustion 10.

Le contrôleur 30 peut être connecté à un sélecteur 15 de commande à trois positions. Lorsque le sélecteur 15 est dans une première position de commande POS1, le sélecteur 15 transmet un signal d'extinction, par exemple analogique, au contrôleur 30 pour commander l'extinction du moteur à combustion 10. Lorsque le sélecteur 15 est dans une deuxième position de commande POS2, le sélecteur 15 transmet un signal de ralenti, par exemple analogique, au contrôleur 30 pour commander l'application d'un régime de ralenti avec le moteur à combustion 10. Enfin, lorsque le sélecteur 15 est dans une troisième position de commande POS3, le sélecteur 15 transmet un signal de régime de vol, par exemple analogique, au contrôleur 30 pour commander un fonctionnement du moteur à combustion 10 selon au moins un régime de vol. Le moteur à combustion 10 au régime de ralenti développe une puissance motrice inférieure à la puissance motrice développée lors du régime de vol, voire une puissance nulle.

En outre, le giravion 1 comporte un bouton d'armement 20 connecté au contrôleur 30 et apte à transmettre un signal, par exemple analogique, à ce contrôleur 30. Le bouton d'armement 20 peut être un bouton monostable ou un bouton bistable.

Selon un autre aspect, le giravion 1 comporte au moins un bouton d'activation 25 connecté au contrôleur 30 et apte à transmettre un signal, par exemple analogique, à ce contrôleur 30. Par exemple, le giravion 1 comprend deux boutons d'activation 26, 27 configurés pour être manœuvrables respectivement par un instructeur et un élève. La référence 25 désigne n'importe quel bouton d'activation, alors que les références 26, 27 désignent des boutons d'activation particuliers si besoin. Par ailleurs, le ou les boutons d'activation 25 sont favorablement des boutons monostables.

Par ailleurs, le giravion 1 peut comporter un alerteur 95 connecté au contrôleur 30 pour générer si besoin une alerte d'armement. L'alerte d'armement peut prendre la forme d'une alarme visuelle, par exemple par le biais de l'émission d'une lumière avec une diode électroluminescente ou un équivalent ou de l'affichage sur un écran d'un ou de plusieurs caractères, d'une alarme sonore, par le biais d'un haut-parleur, et/ou d'une alarme haptique, par exemple à l'aide d'une unité vibrante faisant vibrer un organe tenu ou porté par un individu.

La figure 2 illustre le procédé de l'invention mis en œuvre par un tel giravion 1.

Durant une étape STP0, le contrôleur 30 contrôle le moteur à combustion 10 afin que ce moteur à combustion 10 fonctionne selon le régime de vol.

Le procédé peut alors comprendre une phase de simulation PHASSIM pour simuler la panne du moteur à combustion 10.

Cette phase de simulation PHASSIM comporte alors l'armement, durant une étape STP1, du mode école en manœuvrant le bouton d'armement 20. Le bouton d'armement 20 transmet un signal au contrôleur 30 pour signaler que le mode école est armé et donc autorisé. Eventuellement, le contrôleur 30 transmet un signal d'alerte, par exemple numérique, à l'alerteur 95 afin de générer, lors d'une étape STPAL une alerte d'armement avec cet alerteur 95 tant que le mode école est armé. Selon l'exemple illustré, l'alerte d'armement peut prendre la forme de l'affichage du message « TNGARM ».

Indépendamment de l'affichage d'une alerte d'armement, lorsque le mode école est armé, la phase de simulation PHASSIM comporte alors une activation éventuelle, lors d'une étape STP2, du mode école en manœuvrant un bouton d'activation 25. Le bouton d'activation 25 transmet un signal, par exemple analogique, au contrôleur 30 pour activer le mode école. Lorsque le mode école est activé, le contrôleur 30 pilote en conséquence une décélération du moteur à combustion 10 pour atteindre le régime de ralenti, par exemple en pilotant le doseur de carburant selon une loi de décélération mémorisée. Eventuellement, l'alerteur 95 peut afficher un message signalant l'activation du mode école sur ordre du contrôleur 30.

Pour sortir du mode école, la phase de simulation PHASSIM comporte une désactivation, durant une étape STP3, du mode école en manœuvrant à nouveau le bouton d'activation 25. Le bouton d'activation 25 transmet un signal de désactivation au contrôleur 30 pour désactiver le mode école. Le contrôleur 30 pilote en conséquence une accélération du moteur à combustion 10 pour atteindre un régime de vol, par exemple en pilotant le doseur de carburant selon une loi d'accélération mémorisée.

A ce stade, une nouvelle manœuvre du bouton d'activation 25 sera sans effet. En effet, le mode école ne peut être réinitialisé qu'en manœuvrant à nouveau le bouton d'armement 20.

Eventuellement et notamment en présence d'un bouton d'armement 20 monostable, la désactivation du mode école peut induire de fait le désarmement du mode école. Une nouvelle sollicitation du bouton d'armement 20 permet alors d'initier une nouvelle phase de simulation en armant un nouveau mode école.

Dans la négative, la phase de simulation PHASSIM peut nécessiter un désarmement du mode école, lors d'une étape STP4, en manœuvrant le bouton d'armement 20. Après l'armement STP1 du mode école, la seconde manœuvre du bouton d'armement 20 induit le désarmement STP4 qui met fin à la phase de simulation PHASSIM. A la suite de la seconde manœuvre du bouton d'armement 20, le bouton d'armement 20 transmet le signal de désarmement, par exemple analogique, au contrôleur 30. Si le moteur à combustion 10 est au régime de ralenti, alors le contrôleur 30 pilote à la suite du désarmement une accélération du moteur à combustion 10 pour atteindre le régime de vol. Il est à noter qu'une étape STP4 de désarmement peut aussi être réalisée après l'armement ou l'activation du mode école si besoin.

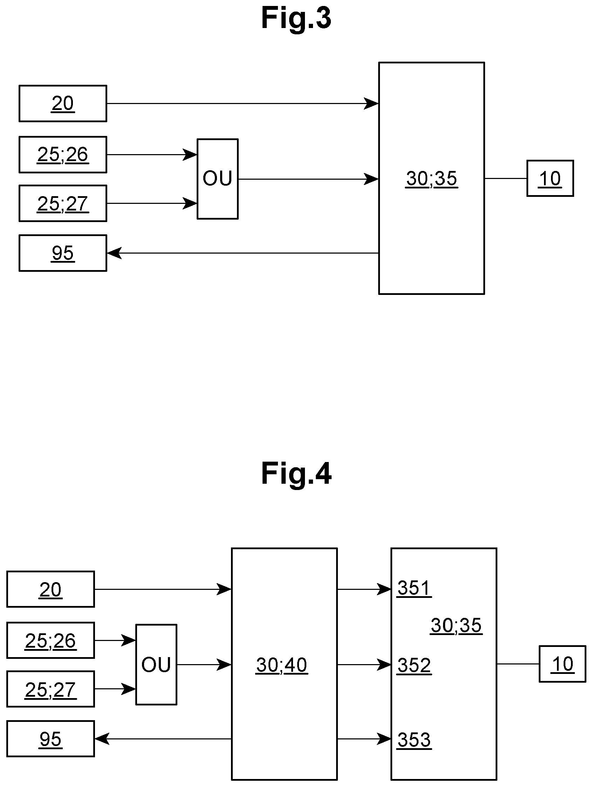

Les figures 3 à 13 illustrent diverses réalisations.

Selon la figure 3, le contrôleur 30 comporte un calculateur moteur 35 contrôlant le moteur à combustion 10. Par exemple, le moteur à combustion est un turbomoteur et le calculateur moteur peut être un calculateur d'un système FADEC. Le sélecteur 15, le bouton d'armement 20 et le ou les boutons d'activation 25 sont alors connectés au calculateur moteur 35, ce calculateur moteur 35 étant configuré pour mettre en œuvre les étapes précitées de la phase de simulation PHASSIM.

Le terme « calculateur » désigne une unité de traitement qui peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

Selon la figure 4, le contrôleur 30 comporte un calculateur avionique 40 et un calculateur moteur 35 contrôlant le moteur à combustion 10. Le sélecteur 15, le bouton d'armement 20 et le ou les boutons d'activation 25 sont alors connectés au calculateur avionique 40, le calculateur avionique 40 communiquant avec le calculateur moteur 35. Par exemple, le calculateur avionique 40 transmet un signal soit vers une première entrée 351 du calculateur moteur 35 pilotant l'extinction du moteur à combustion 10 lorsque le moteur à combustion 10 doit être éteint, soit vers une deuxième entrée 352 du calculateur moteur 35 pilotant un fonctionnement au ralenti du moteur à combustion 10 lorsque le moteur à combustion 10 doit fonctionner selon le régime de ralenti, soit vers une troisième entrée 353 du calculateur moteur 35 lorsque le moteur à combustion 10 doit fonctionner selon le régime de vol, à l'instar d'un sélecteur de vol usuel.

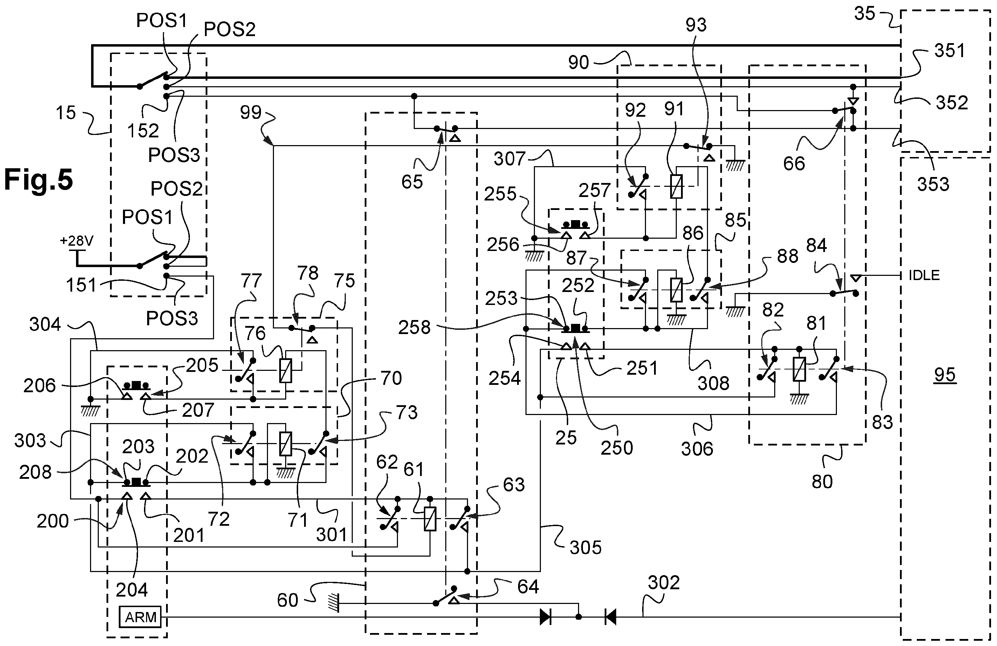

Selon la figure 5, le contrôleur 30 comporte un mécanisme 50 à relais électromécaniques et un calculateur moteur 35 contrôlant le moteur à combustion 10.

Le bouton d'armement 20 et le bouton d'activation 25 sont connectés au mécanisme 50 à relais électromécaniques, le mécanisme 50 à relais électromécaniques communiquant avec le calculateur moteur 35 pour piloter le régime moteur à mettre en œuvre. Par exemple, le mécanisme 50 à relais électromécaniques est connecté à une première entrée 351 du calculateur moteur 35 pilotant l'extinction du moteur à combustion 10 lorsque le moteur à combustion 10 doit être éteint, à une deuxième entrée 352 du calculateur moteur 35 pilotant un fonctionnement au ralenti du moteur à combustion 10 lorsque le moteur à combustion 10 doit fonctionner selon le régime de ralenti, et à une troisième entrée 353 du calculateur moteur 35 lorsque le moteur à combustion 10 doit fonctionner selon le régime de vol, à l'instar d'un sélecteur de vol usuel.

Selon l'exemple illustré, le mécanisme 50 à relais électromécaniques comporte à cet effet six relais.

En outre, le bouton d'armement 20 peut, dans une première position d'armement, fermer un premier contact d'armement 200 et un deuxième contact d'armement 205, et ouvrir un troisième contact d'armement 208. Dans une deuxième position, le bouton d'armement 20 ouvre le premier contact d'armement 200 et le deuxième contact d'armement 205, et ferme le troisième contact d'armement 208.

Le premier contact d'armement 200 comporte une première borne d'armement d'entrée 204 reliée électriquement à une borne 151 du sélecteur 15 de commande atteinte lorsque le sélecteur est dans la troisième position de commande POS3, et une première borne d'armement de sortie 201. Le deuxième contact d'armement 205 comporte des bornes de désarmement d'entrée 206 et de sortie 207. Enfin, le troisième contact d'armement 208 comporte une deuxième borne d'armement d'entrée 203 et une deuxième borne d'armement de sortie 202.

De même, chaque bouton d'activation 25 ferme, dans une première position un premier contact d'activation 250 et un deuxième contact d'activation 255, et ouvre un troisième contact d'activation 258. Dans une deuxième position, chaque bouton d'activation 25 ouvre le premier contact d'activation 250 et le deuxième contact d'activation 255, et ferme le troisième contact d'activation 258.

Le premier contact d'activation 250 comporte une première borne d'activation d'entrée 254 et une première borne d'activation de sortie 251. Le deuxième contact d'activation 255 comporte des bornes de désactivation d'entrée 256 et de sortie 257. Enfin, le troisième d'activation 258 comporte une deuxième borne d'activation d'entrée 253 et une deuxième borne d'activation de sortie 252.

Dès lors, le mécanisme 50 à relais électromécaniques comporte un premier relais 60 muni d'une première bobine 61 reliée électriquement par une première liaison électrique 301 à la première borne d'armement de sortie 201 et à une liaison de désarmement 99 débouchant sur une masse électrique. La première bobine 61 ferme, lorsqu'elle est alimentée électriquement, un premier contact primaire 62 liant la première liaison électrique 301 à la première borne d'armement d'entrée 204, un premier contact secondaire 63 liant la première liaison électrique 301 à un deuxième relais 70 ainsi qu'à la deuxième borne d'armement d'entrée 203 et au bouton d'activation 25, un premier contact tertiaire 64 liant la masse électrique à une liaison d'alerte 302 débouchant sur l'alerteur 95, et ouvre un premier contact quarter 65 agencé entre une borne 152 du sélecteur 15 de commande atteinte lorsque le sélecteur est dans la troisième position de commande POS3 et l'entrée 353 du calculateur moteur 35.

Le deuxième relais 70 est muni d'une deuxième bobine 71 reliée électriquement à la deuxième borne d'armement de sortie 202 et à la masse électrique. La deuxième bobine 71 ferme, lorsqu'elle est alimentée électriquement, un deuxième contact primaire 72 agencé sur une liaison électrique 303 liant la deuxième borne d'armement d'entrée 203 à la deuxième borne d'armement de sortie 202, et un deuxième contact secondaire 73 liant la deuxième borne d'armement de sortie 202 à un troisième relais 75.

En particulier, le troisième relais 75 est muni d'une troisième bobine 76 reliée électriquement à la borne de désarmement de sortie 207 et à la deuxième borne d'armement de sortie 202 via le deuxième contact secondaire 73. La troisième bobine 76 ferme, lorsqu'elle est alimentée électriquement, un troisième contact primaire 77 agencé sur une liaison électrique 304 pour lier les bornes de désarmement d'entrée 206 et de sortie 207 entre elles, et ouvre un quatrième contact secondaire 78 agencé sur la liaison de désarmement 99.

Dès lors, un quatrième relais 80 est muni d'une quatrième bobine 81 reliée électriquement à la première borne d'activation de sortie 251 et à la masse électrique. La première borne d'activation d'entrée 254 est reliée électriquement à la première borne d'armement de sortie 201, via une liaison électrique 305 atteignant le premier contact secondaire 63, et à la deuxième borne d'armement d'entrée 203. La quatrième bobine 81 ferme, lorsqu'elle est alimentée électriquement, un quatrième contact primaire 82 liant la première borne d'activation de sortie 251 à la liaison électrique 305, un quatrième contact secondaire 83 liant la première borne d'activation de sortie 251 au cinquième relais 85 via une liaison électrique 306, et ouvre un quatrième contact tertiaire 84 lié à l'alerteur 95 ainsi qu'un quatrième contact quarter 66 agencé entre une borne 152 du sélecteur atteinte dans la troisième position de commande POS3 et la troisième entrée 353 du calculateur moteur 35.

Le cinquième relais 85 est muni d'une cinquième bobine 86 reliée électriquement à la deuxième borne d'activation de sortie 252 par une liaison intermédiaire 308 et à la masse électrique. La cinquième bobine 86 ferme, lorsqu'elle est alimentée électriquement, un cinquième contact primaire 87 connecté à la liaison intermédiaire 308 et à la liaison électrique 306 lié à la deuxième borne d'activation d'entrée 253, et un cinquième contact secondaire 88 connecté à la liaison intermédiaire alimentant 308 et à un sixième relais 90.

Le sixième relais 90 est muni d'une sixième bobine 91 reliée électriquement à la borne de désactivation de sortie 257 et à la deuxième borne d'activation de sortie 252 via le cinquième contact secondaire 88. La sixième bobine 91 ferme, lorsqu'elle est alimentée électriquement, un sixième contact primaire 92 connectée à la borne de désactivation d'entrée 256 via une liaison électrique 307 et à la borne de désactivation de sortie 257, et ouvre un sixième contact secondaire 93 agencé sur la liaison de désarmement 99.

Dans ce contexte, la figure 5 illustre le mécanisme 50 à relais électromécanique quand le sélecteur de commande 15 est dans la première position de commande POS1.

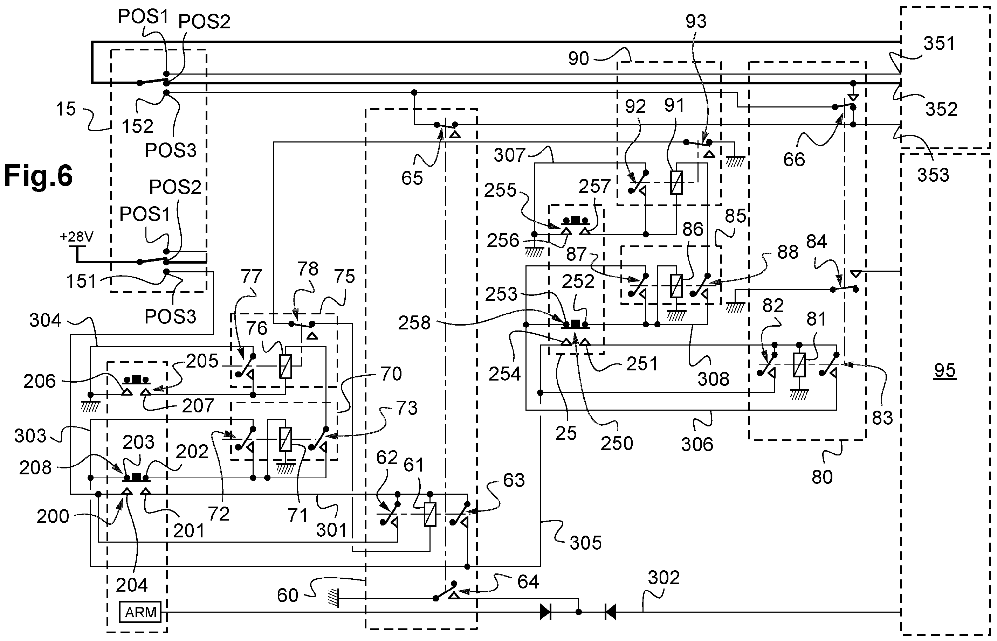

Dans la figure 6, le sélecteur de commande 15 est dans la deuxième position de commande POS2 et transmet directement un signal analogique à l'entrée 352 du calculateur moteur 35.

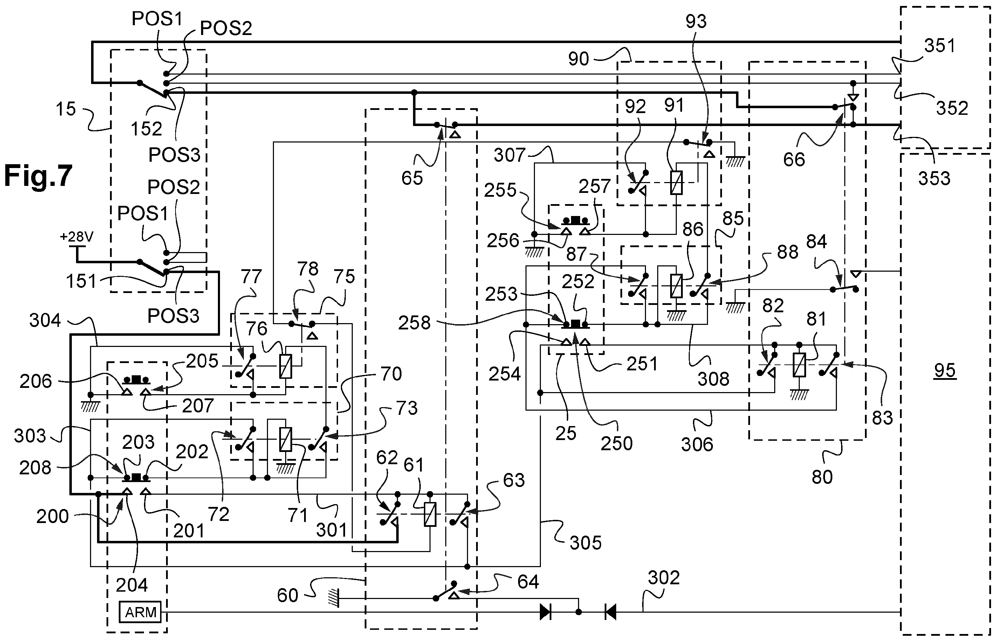

Dans la figure 7, le sélecteur de commande 15 est dans la troisième position de commande POS3 et transmet directement un signal analogique à la première borne d'armement d'entrée 204 et à l'entrée 352 du calculateur moteur 35 via le premier contact quarter 65 et le quatrième contact quarter 66.

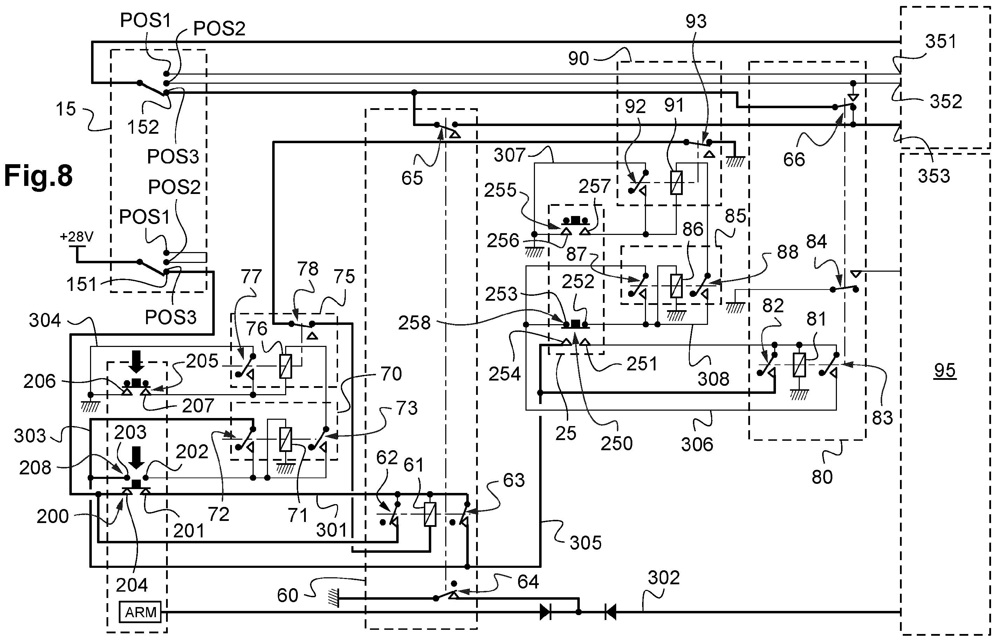

Dans la figure 8, un pilote appuie sur le bouton d'armement 20 qui passa dans sa première position. La première bobine 61 est alimentée électriquement de manière à fermer le premier contact primaire 62, le premier contact secondaire 63 et le premier contact tertiaire 64, et à ouvrir le premier contact quarter 65. Le calculateur moteur 35 reçoit alors toujours un signal à son entrée 353 via le quatrième contact quarter 66. Le mode école est alors armé.

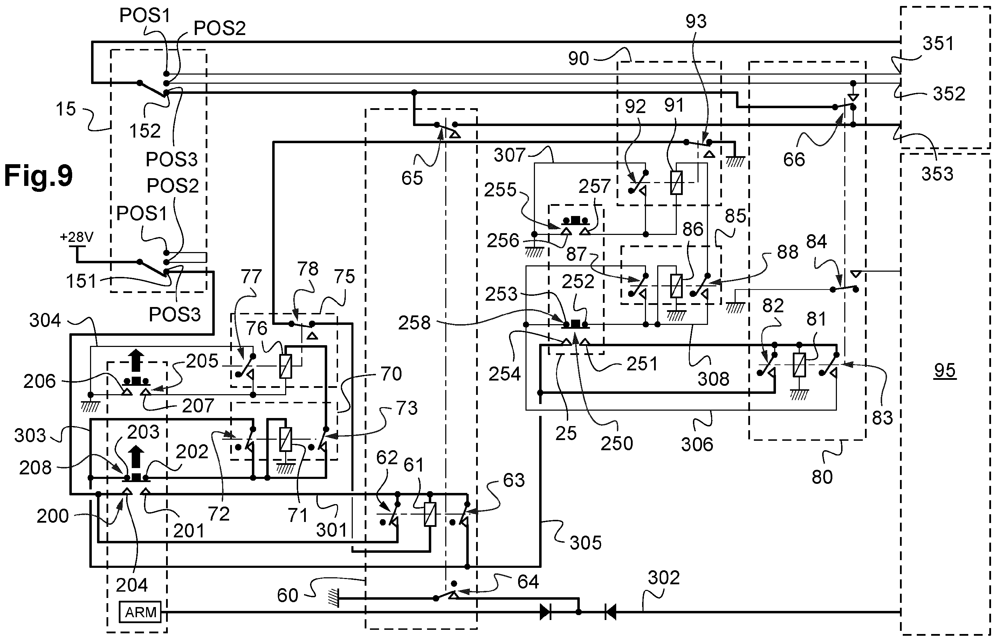

Dans la figure 9, le bouton d'armement 20 est relâché et atteint sa deuxième position. La première bobine 61 reste alimentée électriquement. De plus, la deuxième bobine 71 est aussi alimentée électriquement et ferme le deuxième contact primaire 72 et le deuxième contact secondaire 73. Le mode école reste armé.

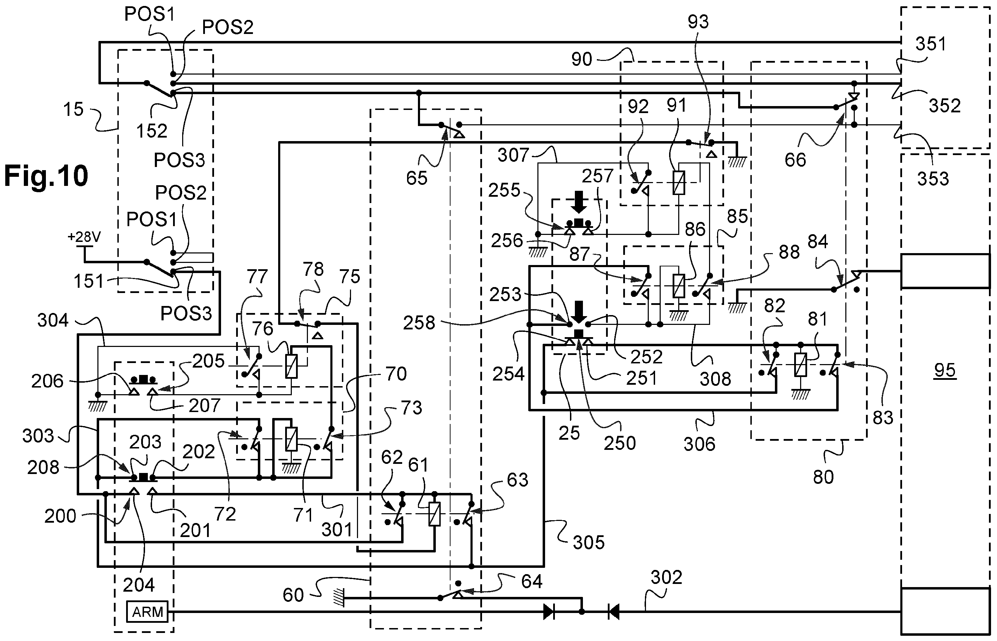

Selon la figure 10, un pilote appuie sur un bouton d'activation 25 pour simuler une panne moteur. La quatrième bobine 81 est alimentée électriquement de manière à fermer le quatrième contact primaire 82, le quatrième contact secondaire 83 et le quatrième contact tertiaire 84, et à ouvrir le quatrième contact quarter 66. Le calculateur moteur 35 reçoit alors un signal à son entrée 352 via le quatrième contact quarter 66. Le mode école est activé. L'alerteur 95 peut signaler que le moteur à combustion est mis au ralenti.

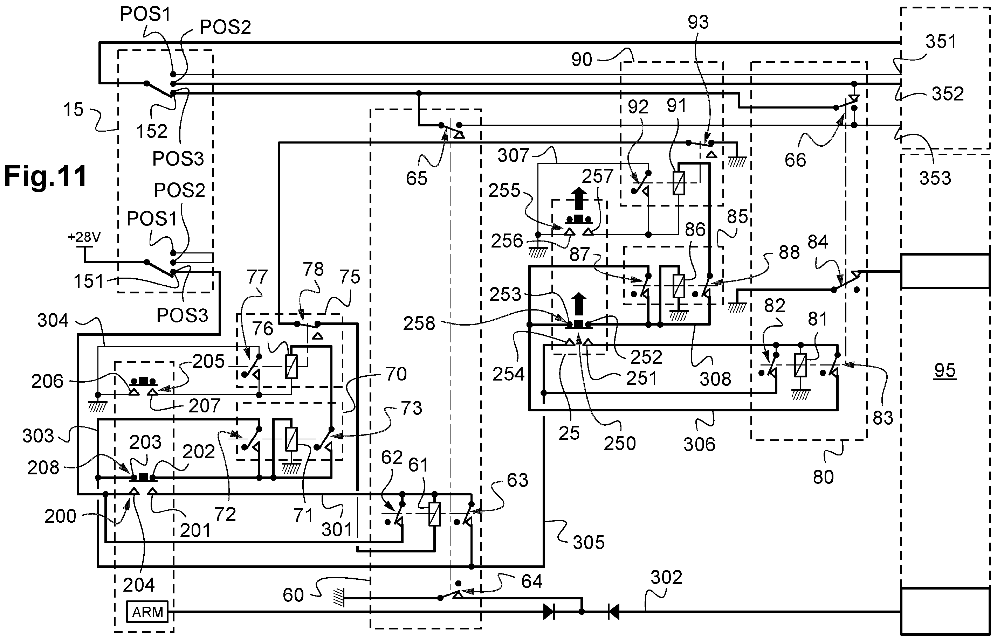

Dans la figure 11, le bouton d'activation 25 est relâché. La quatrième bobine 81 reste alimentée électriquement. Le mode école reste activé.

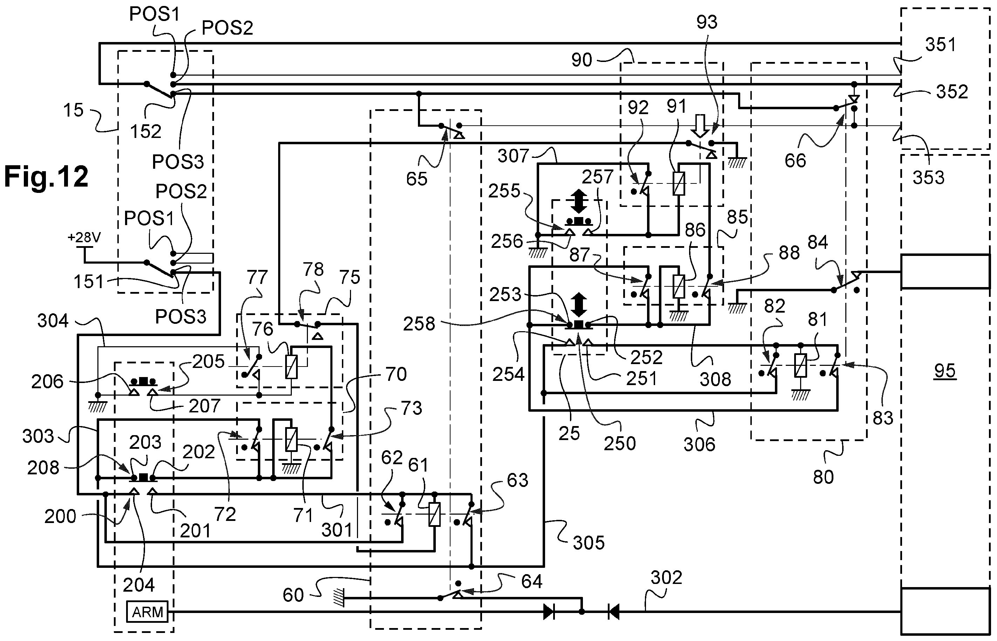

Selon la figure 12, un pilote appuie sur un bouton d'activation 25 pour désactiver le mode école. La sixième bobine 91 est alimentée électriquement de manière à fermer le sixième contact primaire 92, et à ouvrir le sixième contact secondaire 93. Le mode école est ainsi désactivé.

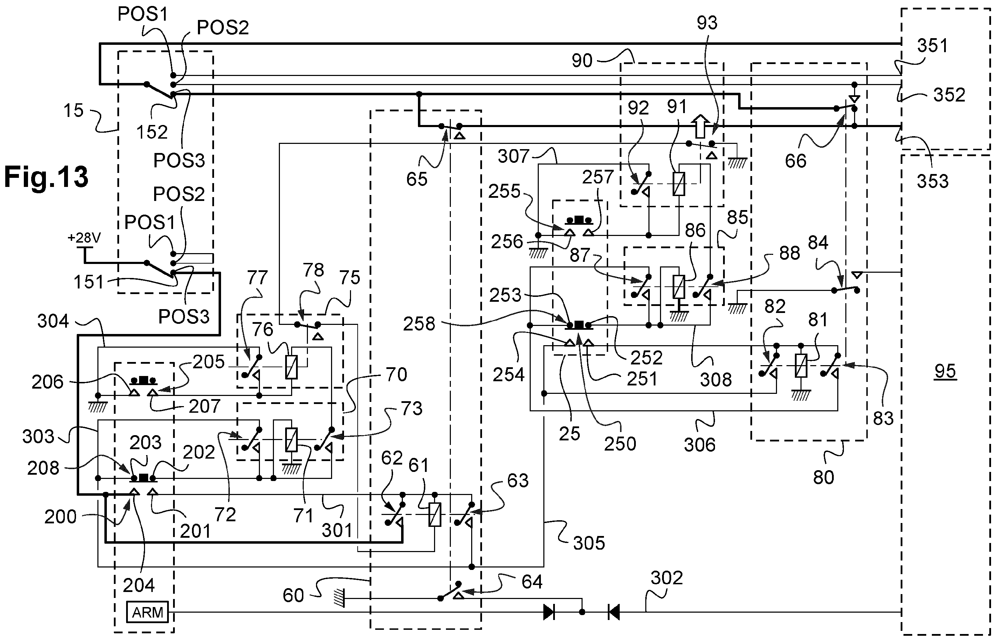

Selon la figure 13, en présence d'un bouton d'armement 20 monostable, le système revient alors dans la configuration de la figure 7, Le mode école étant désarmé. En présence d'un bouton d'armement 20 bistable, un appui sur le bouton d'armement 20 permet de désarmer le mode école.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Procédé de simulation d'une panne d'un moteur à combustion (10) d'un giravion (1) monomoteur, le giravion (1) comprenant un contrôleur (30) pilotant le moteur à combustion (10), le moteur à combustion (10) pouvant fonctionner sur ordre du contrôleur (30) dans un mode nominal selon au moins un régime de vol pour fournir une puissance motrice à au moins un rotor (5, 6), le moteur à combustion (10) pouvant fonctionner sur ordre du contrôleur selon un régime de ralenti,
**caractérisé en ce que** le procédé comporte une phase de simulation (PHASSIM) ayant les étapes suivantes :
- armement (STP1) d'un mode école en manœuvrant un bouton d'armement (20) en communication avec le contrôleur (30), le contrôleur (30) pilotant un fonctionnement du moteur à combustion (10) selon ledit au moins un régime de vol, le mode école ne pouvant pas être activé en l'absence dudit armement (STP1) du mode école,
- sous réserve dudit armement (STP1) du mode école, activation (STP2) du mode école en manœuvrant un bouton d'activation (25) qui est en communication avec le contrôleur (30) et différent du bouton d'armement (20), le contrôleur (30) pilotant en conséquence une décélération du moteur à combustion (10) pour atteindre ledit régime de ralenti,
- désactivation (STP3) du mode école en manœuvrant à nouveau le bouton d'activation (25), le contrôleur (30) pilotant en conséquence une accélération du moteur à combustion (10) pour atteindre ledit au moins un régime de vol, le mode école ne pouvant être réinitialisé que lors d'une nouvelle phase de simulation (PHASSIM).

2. Procédé selon la revendication 1,
**caractérisé en ce que** la phase de simulation (PHASSIM) comporte un désarmement (STP4) en manœuvrant le bouton d'armement (20) à tout moment après ledit armement (STP1) du mode école, le désarmement (STP4) mettant fin à la phase de simulation (PHASSIM), et si le moteur à combustion (10) est au régime de ralenti alors le contrôleur (30) pilote, à la suite du désarmement (STP4), une accélération du moteur à combustion (10) pour atteindre ledit au moins un régime de vol .

3. Procédé selon l'une quelconque des revendications 1 à 2,
**caractérisé en ce que** le procédé comporte une génération (STEPAL) d'une alerte d'armement avec un alerteur (95) tant que ledit mode école est armé.

4. Giravion (1) monomoteur comportant un unique moteur à combustion (10) pour mettre en mouvement une chaîne mécanique (3) connectée à au moins un rotor (5, 6), le giravion (1) comprenant un contrôleur (30) pilotant le moteur à combustion (10), le moteur à combustion (10) pouvant fonctionner sur ordre du contrôleur (30) dans un mode nominal selon au moins un régime de vol pour fournir une puissance motrice à au moins un rotor (5, 6), le moteur à combustion (10) pouvant fonctionner sur ordre du contrôleur (30) selon un régime de ralenti,
**caractérisé en ce que** le giravion (1) comporte un bouton d'armement (20) et au moins un bouton d'activation (25) connectés au contrôleur (30) pour mettre en œuvre le procédé selon l'une quelconque des revendications 1 à 3.

5. Giravion selon la revendication 4,
**caractérisé en ce que** le giravion (1) comporte un alerteur (95) connecté au contrôleur (30) pour générer une alerte d'armement suite à l'armement du mode école.

6. Giravion selon l'une quelconque des revendications 4 à 5,
**caractérisé en ce que** le giravion (1) comprend deux boutons d'activation (25) configurés pour être manœuvrables respectivement par deux pilotes.

7. Giravion selon l'une quelconque des revendications 4 à 6,
**caractérisé en ce que** ledit au moins un bouton d'activation (25) est un bouton monostable.

8. Giravion selon l'une quelconque des revendications 4 à 7,
**caractérisé en ce que** ledit au moins un bouton d'armement (20) est un bouton monostable ou un bouton bistable.

9. Giravion selon l'une quelconque des revendications 4 à 8,
**caractérisé en ce que** ledit contrôleur (30) comporte un calculateur moteur (35) contrôlant le moteur à combustion (10), ledit bouton d'armement (20) et ledit bouton d'activation (25) communiquant avec le calculateur moteur (35) pour mettre en œuvre la phase de simulation (PHASSIM).

10. Giravion selon l'une quelconque des revendications 4 à 8,
**caractérisé en ce que** ledit contrôleur (30) comporte un calculateur avionique (40) et un calculateur moteur (35) contrôlant le moteur à combustion (10), ledit bouton d'armement (20) et ledit bouton d'activation (25) communiquant avec le calculateur avionique (40), le calculateur avionique (40) communiquant avec le calculateur moteur (35) pour mettre en œuvre la phase de simulation (PHASSIM).

11. Giravion selon l'une quelconque des revendications 4 à 8,
**caractérisé en ce que** ledit contrôleur comporte un mécanisme (50) à relais électromécaniques et un calculateur moteur (35) contrôlant le moteur à combustion (10), ledit bouton d'armement (20) et ledit bouton d'activation (25) communiquant avec le mécanisme (50) à relais électromécaniques, le mécanisme (50) à relais électromécaniques communiquant avec le calculateur moteur (35) pour mettre en œuvre la phase de simulation (PHASSIM).

12. Giravion selon la revendication 11,
**caractérisé en ce que** le bouton d'armement (20) ferme un premier contact d'armement (200) et un deuxième contact d'armement (205) dans une première position d'armement, le bouton d'armement (20) fermant dans une deuxième position d'armement un troisième contact d'armement (208), le bouton d'activation (25) fermant un premier contact d'activation (250) et un deuxième contact d'activation (255) dans une première position d'activation, le bouton d'activation (25) fermant dans une deuxième position d'activation un troisième contact d'activation (258), le mécanisme (50) à relais électromécaniques comportant :
- un premier relais (60) muni d'une première bobine (61) reliée électriquement à une première borne d'armement de sortie (201) dudit premier contact d'armement (200),
- un deuxième relais (70) muni d'une deuxième bobine (71) reliée électriquement à une deuxième borne d'armement de sortie (202) dudit troisième contact d'armement (208),
- un troisième relais (75) muni d'une troisième bobine (76) reliée électriquement au deuxième contact d'armement (205) et à la deuxième borne d'armement de sortie (202) via un contact (73) du deuxième relais (70) piloté par la deuxième bobine (71),
- un quatrième relais (80) muni d'une quatrième bobine (81) reliée électriquement à une première borne d'activation de sortie (251) du premier contact d'activation (250), une première borne d'activation d'entrée (254) du premier contact d'activation (250) étant reliée électriquement à la première borne d'armement de sortie (201) via un contact (63) du premier relais (60) piloté par la première bobine (61),
- un cinquième relais (85) muni d'une cinquième bobine (86) reliée électriquement à une deuxième borne d'activation de sortie (252) du troisième contact d'activation (258) ,
- un sixième relais (90) muni d'une sixième bobine (91) reliée électriquement à une borne de désactivation de sortie (257) du deuxième contact d'activation (255) et à la deuxième borne d'activation de sortie (252) via un contact (88) du cinquième relais (85) piloté par la cinquième bobine (86), une ligne électrique de désarmement (99) étant reliée électriquement à la première bobine (61) et comprenant un contact (78) du troisième relais (75) piloté par la troisième bobine (76) et un contact (93) du sixième relais (90) piloté par la sixième bobine (91).
